# EUROPÄISCHE PATENTANMELDUNG

(11) **EP 1 944 225 A2**
(43) Veröffentlichungstag der Anmeldung: **16.07.2008**
(21) Anmeldenummer: 08000468.2
(22) Anmeldetag: 11.01.2008
(51) Int. Cl.: B62J 15/02

(54) **Befestigungsanordnung für Radschützer und Schutzkappe**

(30) Priorität: 12.01.2007 DE 102007001924
(71) Anmelder: sks-metaplast SCHEFFER-KLUTE GMBH, D-59846 Sundern/Sauerland (DE)
(72) Erfinder: Kordes, Sven, 59846 Sundern (DE); Grabski, Karsten, 58739 Wickede/ Ruhr (DE)
(74) Vertreter: Brune, Axel

(57) **Zusammenfassung**

Befestigungsanordnung für einen Radschützer (R) an einem Fahrradrahmen, umfassend mindestens ein Verbindungsmittel (4), eine Strebe (6) und eine Schutzkappe (1) für die Strebe (6), wobei die Strebe (6) an dem Fahrradrahmen festlegbar ist, wobei das Verbindungsmittel (4) an dem Radschützer festlegbar ist, wobei die Schutzkappe (1) an dem Verbindungsmittel (4) festlegbar ist, sowie Schutzkappe (1) für eine Befestigungsanordnung nach einem der Ansprüche 1 bis 6, wobei die Schutzkappe (1) einen hohlzylinderförmigen Schaft (2) zum Aufstecken auf die Strebe (6) aufweist, wobei der Schaft (2) zur Aufnahme in dem Verbindungsmittel (4) ausgestaltet ist, sowie Schutzkappe (10) für eine Befestigungsanordnung nach einem der Ansprüche 7 bis 9, wobei die Schutzkappe einen hohlzylinderförmigen Schaft (13) zum Aufstecken auf die Strebe (6), sowie einen hohlkastenförmigen Befestigungsschuh (14) zur Befestigung an der Anschlussfahne (12) aufweist.

## Beschreibung

Die vorliegende Erfindung betrifft eine Befestigungsanordnung für einen Radschützer an einem Fahrradrahmen nach dem Oberbegriff des Anspruchs 1, sowie eine Schutzkappe für eine Befestigungsanordnung nach den Oberbegriffen der Ansprüche 10 und 14.

Es ist bekannt, Radschützer (Schutzbleche) unter anderem über Streben mit dem Fahrradrahmen zu verbinden. Bei den Streben handelt es sich um Profilstäbe, die einerseits am Fahrradrahmen, beispielsweise im Bereich der Vorderrad- oder der Hinterradnabe, und andererseits am Radschützer selbst befestigt sind.

Zur Befestigung der Streben am Radschützer sind beispielsweise Verbindungsmittel zur unmittelbaren Verbindung von Strebe und Radschützer vorgesehen. Bei den Verbindungsmitteln handelt es sich in der Regel um profilierte Kunststoffteile, die einerseits mittels einer Schraube mit dem Radschützer verbunden sind. Andererseits weisen die Verbindungsmittel einen Schacht zur Aufnahme der Streben auf, wobei die Strebe vorzugsweise in einer vorbestimmten Position innerhalb des Schachtes fixiert werden kann. Auf diese Weise kann der Abstand zwischen Radschützer und Rahmen sehr genau eingestellt werden.

Um eine gewisse Verstellmöglichkeit zu bieten sind die Streben länger als notwendig ausgeführt, so dass sie aus den Verbindungsmitteln hervorstehen. Zur Vermeidung von Verletzungen wird in der Regel eine Schutzkappe auf das Ende der Strebe aufgesteckt.

Nachteilig in diesem Zusammenhang ist jedoch, dass diese Schutzkappe sehr schnell verloren geht. Im Ergebnis sind die Streben dann wieder ungeschützt und die Verletzungsgefahr ist erneut gegeben.

Hier setzt die vorliegende Erfindung an und macht es sich zur Aufgabe eine Befestigungsanordnung für einen Radschützer vorzuschlagen, bei der die Schutzkappe nicht verloren gehen kann und das Verletzungsrisiko entsprechend gemindert ist.

Erfindungsgemäß wird diese Aufgabe dadurch gelöst, dass die Schutzkappe an dem Verbindungsmittel festlegbar ist. Dementsprechend kann die Schutzkappe nicht verloren gehen und das Verletzungsrisiko ist entsprechend nicht gegeben.

Weitere vorteilhafte Ausgestaltungen der Befestigungsanordnung ergeben sich aus den Merkmalen der rückbezogenen Ansprüche. Eine besonders vorteilhafte Ausgestaltung der vorgeschlagenen Befestigungsanordnung liegt darin, dass die Schutzkappe einen hohlzylinderförmigen Schaft zum Aufstecken auf die Strebe aufweist, wobei das Verbindungsmittel einen Schacht zur Aufnahme des Schaftes aufweist, wobei das Verbindungsmittel eine Aussparung zur Verbindung mit dem Radschützer aufweist, wobei neben dem Schacht ein Schlitz vorgesehen ist, wobei eine Schraube vorgesehen ist, die sowohl durch den Schlitz, als auch durch die Aussparung verläuft. Soweit das Verbindungsmittel durch die Aussparung auf den Radschützer aufgeschoben wird, kann einerseits durch Eindrehen der Schraube ein Loch in den Radschützer gebohrt werden, so dass das Verbindungsmittel über eine formschlüssige Verbindung mit dem Radschützer verbunden werden kann. Andererseits wird der Schacht verengt, da der Schlitz durch das Eindrehen der Schraube zusammengezogen wird. Im Ergebnis ist das Verbindungsmittel in einem Arbeitsschritt mit dem Radschützer verbunden und die Schutzkappe, insbesondere der Schaft der Schutzkappe, ist kraftschlüssig mit dem Verbindungsmittel verbunden.

Es ist weiterhin bekannt, dass Radschützer mit einer sogenannten Festbrücke ausgestattet sind. Bei der Festbrücke handelt es sich um ein Blech- oder Kunststoffformteil, welches quer zur Längsrichtung des Radschützers angebracht ist und weitgehend der inneren Kontur des Radschützers folgt. Vorzugsweise ist die Festbrücke mittels Nieten mit dem Radschützer verbunden. Der Wesentliche Zweck der Festbrücke liegt einerseits in einer Stabilisierung des Radschützers, aber auch darin, eine Anschlussmöglichkeit für Streben bereitzustellen, die vorzugsweise zwischen der Vorderrad- oder Hinterradnabe und dem Radschützer verlaufen. Hierzu ist vorgesehen, dass die Festbrücke mindestens eine Anschlussfahne aufweist, die aus dem eigentlichen Radschützer herausragt und mit einem Anschlussmittel für die Strebe ausgestattet ist. Das Anschlussmittel kann beispielsweise als Bolzen mit einer Querbohrung und einem Gewinde ausgestaltet sein. Entsprechend kann die Strebe durch die Querbohrung hindurch gesteckt und mittels einer Schraube auf dem Gewinde an die Anschlussfahne gedrückt werden. Das Verbindungsmittel zwischen Strebe und Radschützer wird in diesem Falle im Wesentlichen aus der Festbrücke, der Anschlussfahne und dem Bolzen gebildet.

Auch in diesem Fall ragt die Strebe hervor und es besteht grundsätzlich ein Verletzungsrisiko. Aus dem Stand der Technik ist auch hier bekannt, eine Schutzkappe auf die Strebenenden aufzustecken, wobei auch hier die Gefahr besteht, dass die Schutzkappe verloren geht, so dass die Strebenenden erneut ein Verletzungsrisiko darstellen.

In besonders vorteilhafter Weise kann diese Art von Befestigungsanordnung durch die in Anspruch 7, insbesondere die in Anspruch 8 und 9 vorgeschlagenen Merkmale, weitergebildet werden. Dadurch, dass die Schutzkappe einen Befestigungsschuh aufweist, der auf die Anschlussfahne aufsteckbar ist, kann sichergestellt werden, dass die Schutzkappe nicht verloren gehen kann und die Verletzungsgefahr entsprechend minimiert ist.

Eine weitere Aufgabe der vorliegenden Erfindung liegt darin, eine unverlierbare Schutzkappe für eine Strebe zur Anbringung eines Radschützers an einem Fahrrad bereitzustellen.

Erfindungsgemäß wird diese Aufgabe dadurch gelöst, dass die Schutzkappe einen hohlzylinderförmigen Schaft zum Aufstecken auf die Strebe aufweist, wobei der Schaft zur Aufnahme in einem Verbindungsmittel ausgestaltet ist. Eine derart ausgestaltete Schutzkappe kann entsprechend nicht verloren gehen, da ein Teil der Schutzkappe stets in dem eigentlichen Verbindungsmittel gehalten wird.

Vorzugsweise kann in diesem Zusammenhang weiterhin vorgesehen sein, dass der Schaft einen Anschlag aufweist, mit dem die Schutzkappe in dem Verbindungsmittel gesichert werden kann. Die Schutzkappe kann entsprechend auf die Strebe aufgeschoben werden. Der Schaft kann durch den Schacht eines zur Verbindung mit dem Radschützer eingerichteten Verbindungsmittels hindurch gesteckt werden. Dementsprechend kann eine Ausrichtung des Radschützers sowohl durch eine Verschiebung der Strebe innerhalb des Schaftes, als auch durch eine Verschiebung des Schaftes gegenüber dem Verbindungsmittel stattfinden. Das Verbindungsmittel kann derart eingerichtet sein, dass durch Festziehen der Verbindungsschraube zum Radschützer eine Klemmung des Schaftes stattfindet, so dass nach erfolgter Ausrichtung des Radschützers eine Fixierung stattfinden kann. Die erfinderische Schutzkappe ist jedoch unverlierbar mit der Strebe verbunden, da die Schutzkappe einerseits nicht in Richtung der Strebe ausrücken kann. Andererseits kann die Schutzkappe auch nicht von der Strebe abgezogen werden, da der Anschlag gegen das Verbindungsmittel stoßen würde und dies verhindert.

In einer vorteilhaften Ausgestaltung der vorgeschlagenen Schutzkappe kann vorgesehen sein, dass der Schaft der Schutzkappe ein oder mehrere Längsschlitze aufweist. Hierdurch kann vorteilhafterweise leichter eine kraftschlüssige Verbindung zwischen Strebe und Schutzkappe aufgebaut werden, indem beispielsweise eine Klemmverbindung des Verbindungsmittels den Schaft im Bereich der Längsschlitze zusammendrückt.

In einer weiteren vorteilhaften Ausgestaltung der vorgeschlagenen Erfindung kann vorgesehen sein, dass der Anschlag der Schutzkappe als umlaufender Kragen, etwa endseitig des Schaftes, ausgestaltet ist. Ein derartiges rotationssymmetrisches Formteil ist leicht herzustellen.

Alternativ kann die Aufgabe auch durch eine Schutzkappe gelöst werden, die sich dadurch auszeichnet, dass sie einen hohlzylinderförmigen Schaft zum Aufstecken auf die Strebe, sowie einen hohlkastenförmigen Befestigungsschuh zur Befestigung an einer Anschlussfahne einer Festbrücke aufweist. Der hohlkastenförmige Befestigungsschuh sorgt entsprechend dafür, dass die Schutzkappe, insbesondere der hohlzylinderförmige Schaft, nicht von der Strebe rutschen und verloren gehen kann.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1a bis 1e: eine Befestigungsanordnung für einen Radschützer nach dem Stand der Technik, insbesondere eine Strebe mit Verbindungsmittel und Schutzkappe nach dem Stand der Technik;
- Fig. 2a bis 2c: eine Befestigungsanordnung für einen Radschützer an einem Fahrradrahmen nach dem Stand der Technik, insbesondere eine Festbrücke mit Streben und Anschlussmitteln, sowie Schutzkappen nach dem Stand der Technik;
- Fig. 3a bis 3f: eine erfindungsgemäße Befestigungsanordnung für einen Radschützer, insbesondere erfindungsgemäße Schutzkappen in Verbindungsmitteln in verschiedenen Ansichten;
- Fig. 4: eine Befestigungsanordnung für einen Radschützer nach dem Stand der Technik, insbesondere eine Schutzkappe nach dem Stand der Technik, sowie Verbindungselement und Strebe;
- Fig. 5: eine erfindungsgemäße Befestigungsanordnung für einen Radschützer, insbesondere eine erfindungsgemäße Schutzkappe, Strebe, Verbindungsmittel;
- Fig. 6: eine erfindungsgemäße Befestigungsanordnung mit einen Radschützer, insbesondere Verbindungsmittel mit Schraube an einem Radschützer befestigt, sowie Strebe und erfindungsgemäße Schutzkappe;
- Fig. 7: eine erfindungsgemäße Befestigungsanordnung für einen Radschützer, insbesondere Verbindungsmittel, erfindungsgemäße Schutzkappe und Strebe;
- Fig. 8a bis 8c: eine erfindungsgemäße Befestigungsanordnung für einen Radschützer, insbesondere erfindungsgemäße Schutzkappe mit Befestigungsschuhen, Festbrücke und Streben in verschiedenen Ansichten;
- Fig. 9: eine erfindungsgemäße Befestigungsanordnung für einen Radschützer, insbesondere eine erfindungsgemäße Schutzkappe mit Befestigungsschuh, Festbrücke und Streben in perspektivischer Ansicht;
- Fig. 10: eine erfindungsgemäße Schutzkappe mit Befestigungsschuh in einer perspektivischen Ansicht;
- Fig. 11: eine erfindungsgemäße Schutzkappe mit Befestigungsschuh in einer perspektivischen Ansicht;

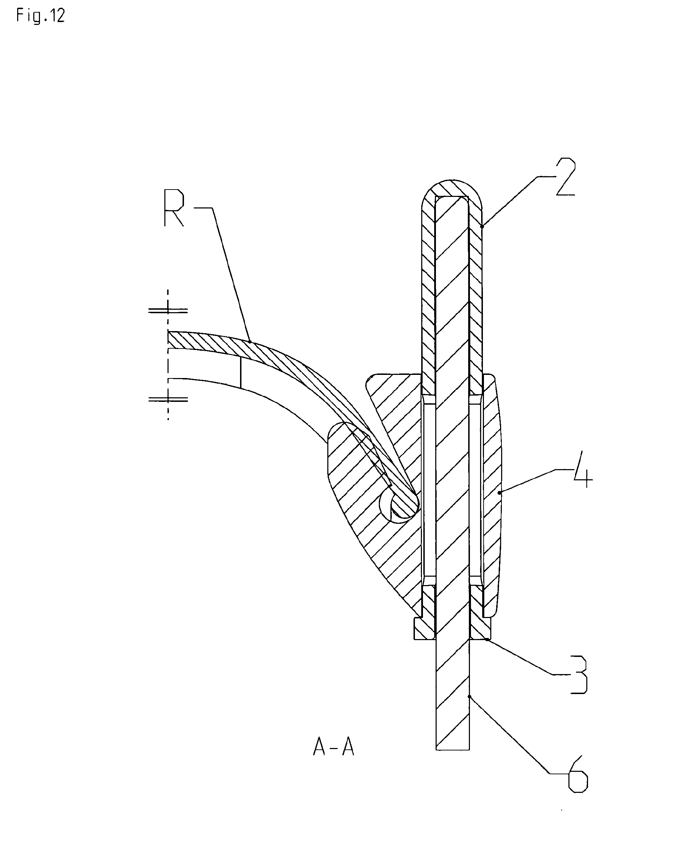

- Fig. 12: eine erfindungsgemäße Befestigungsanordnung mit einem Radschützer, insbesondere eine erfindungsgemäße Schutzkappe, in einer geschnittenen Ansicht.

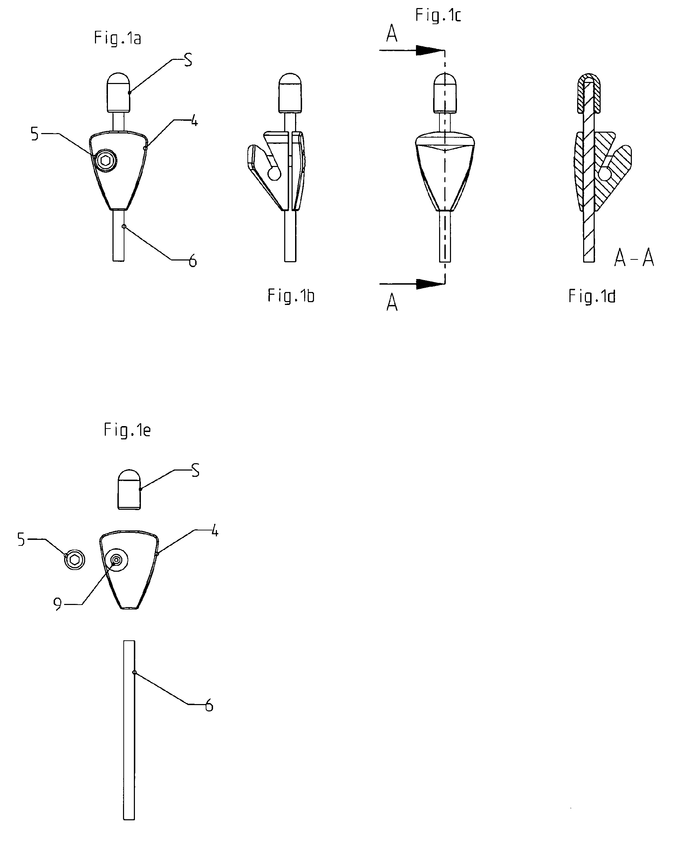

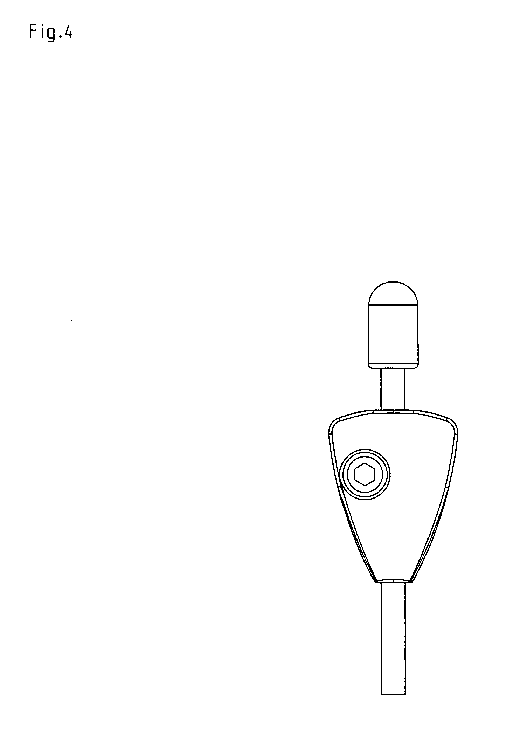

In den Fig. 1a bis 1e und Fig. 4 ist eine Anordnung aus Streben 6, Verbindungsmittel 4 und Schutzkappe S nach dem Stand der Technik dargestellt. Die Schutzkappe kann grundsätzlich verloren gehen, da sie nur auf das Ende der Strebe 6 aufgesteckt ist und letztendlich nur durch Kraftschluss gehalten wird.

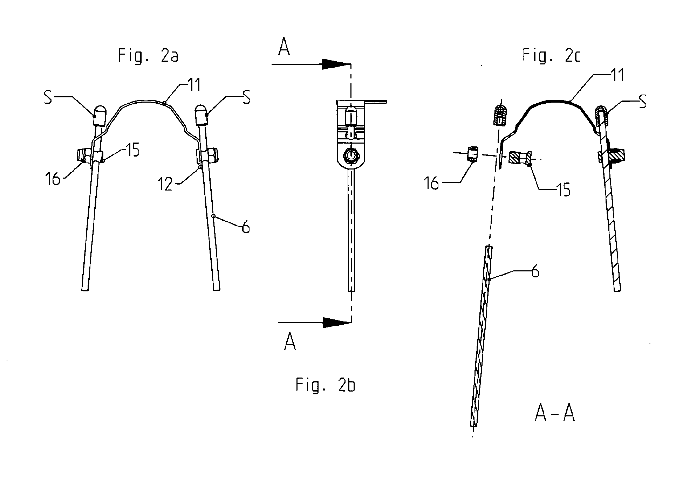

In der Fig. 2a bis 2c ist eine Anordnung aus Festbrücke 11, Streben 6 und Schutzkappen S nach dem Stand der Technik dargestellt. Auch hier kann die Schutzkappe verloren gehen, da sie nur auf das Ende der Strebe 6 aufgesteckt ist und letztendlich nur durch Kraftschluss gehalten wird.

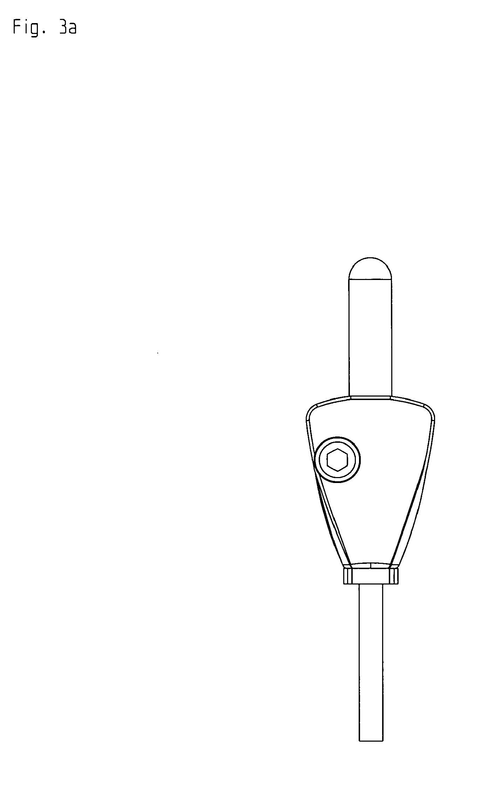

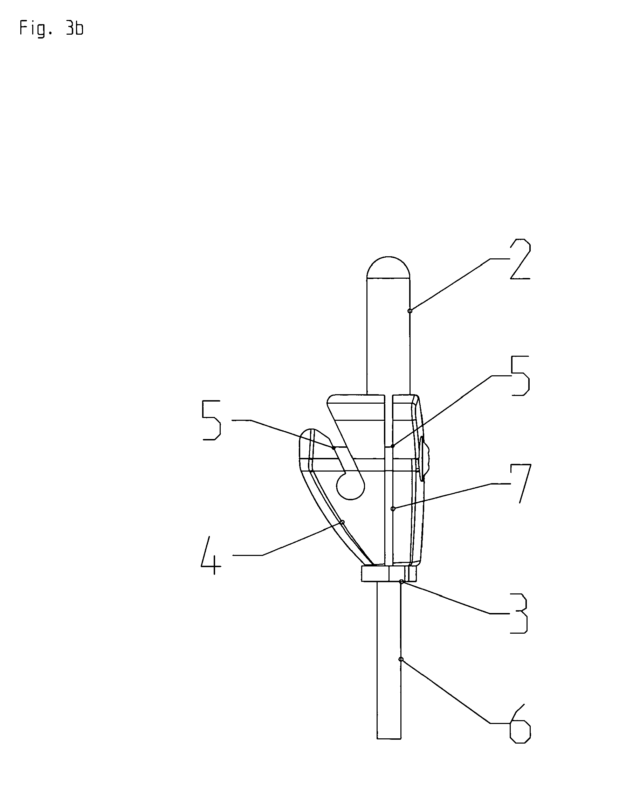

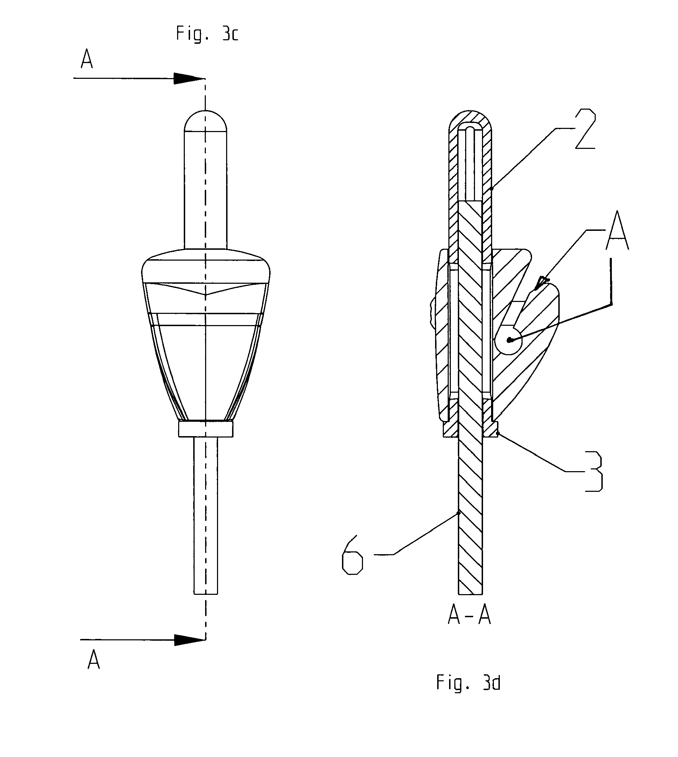

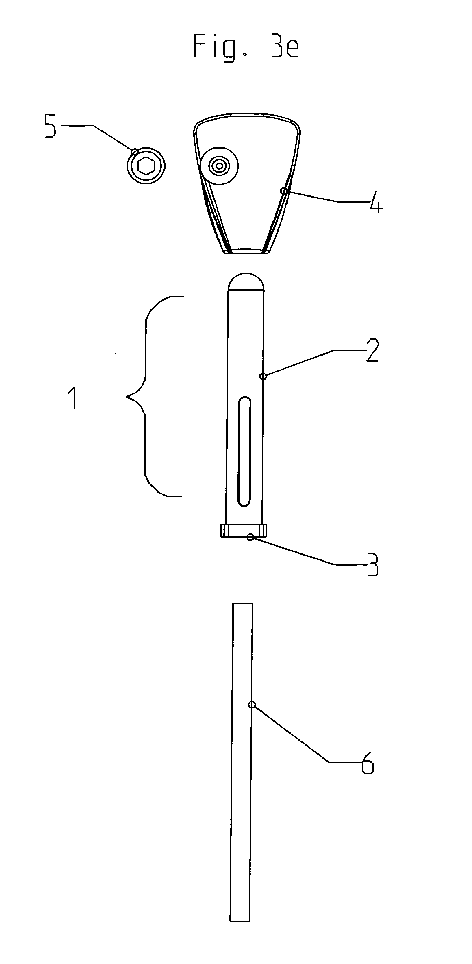

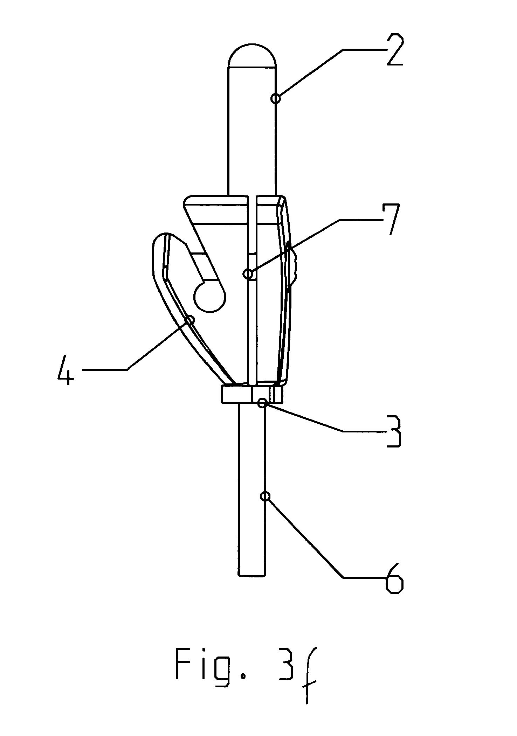

In der Fig. 3a bis 3e ist nunmehr eine erfindungsgemäße Schutzkappe 1 in einem Verbindungsmittel 4 und auf dem Ende einer Strebe 6 dargestellt. Es ist erkennbar, dass die Schutzkappe 1 eine hohlzylinderförmigen Schaft 2 und einen Anschlag 3 in Form eines umlaufenden Kragens aufweist. Insbesondere ist vorgesehen, dass die Schutzkappe einen hohlzylinderförmigen und einseitig geschlossenen Schaft 2 und einen Anschlag aufweist, wobei der Anschlag auf der dem geschlossenen Ende des Schaftes 2 abgewandten Seite des Schaftes 2 vorgesehen ist. Die Strebe 6 ist, wie in Fig. 3d gut zu erkennen ist, entsprechend in den hohlzylinderförmigen Schaft 2 eingeschoben. Der hohlzylinderförmige Schaft 2 ist endseitig verschlossen und weist einen halbkugelförmigen Kopf zur Minimierung der Verletzungsgefahr auf.

Das Verbindungsmittel 4 wiederum weist einen entsprechenden Schacht 7 zur Aufnahme des Schaftes 2 der Schutzkappe 1 auf. Wie insbesondere in den Fig. 3a bis 3e gut zu erkennen, ist die Schutzkappe 1 abschnittsweise, insbesondere der Schaft 2 abschnittsweise, innerhalb des Schachtes 7 aufgenommen und kann letztendlich nicht verloren gehen. Auch sorgt der Anschlag 3 dafür, dass die Schutzkappe 1 zumindest nicht in einer Richtung aus dem Verbindungsmittel herausgeschoben werden kann, was ebenfalls dazu beiträgt, dass die Schutzkappe 1 nicht verloren gehen kann.

Ferner weist das Verbindungsmittel 4 eine Aufnahme in Form einer Aussparung A zur Verbindung mit dem Radschützer und eine Bohrung 9 für eine Schraube 5 auf. Durch das Einsetzen und Drehen der Schraube 5 in der Bohrung 9 können im Wesentlichen zwei Befestigungsvorgänge realisiert werden. Einerseits durchquert die Schraube 5 die Aufnahme A, so dass ein in der Aufnahme A eingesetzter Abschnitt eines Radschützers R von der Schraube 5 durchstoßen werden kann. Ferner kann durch ein Eindrehen der Schraube 5 der Schaft 2 der Schutzkappe 1 innerhalb des Schachtes 7 fixiert werden. Hierzu ist der Schacht 7 seitlich geschlitzt, so dass durch Eindrehen der Schraube 5 in der Bohrung 9 ebenfalls eine Klemmverbindung zwischen dem Schaft 2 der Schutzkappe 1 und dem Verbindungsmittel 4 hergestellt werden kann.

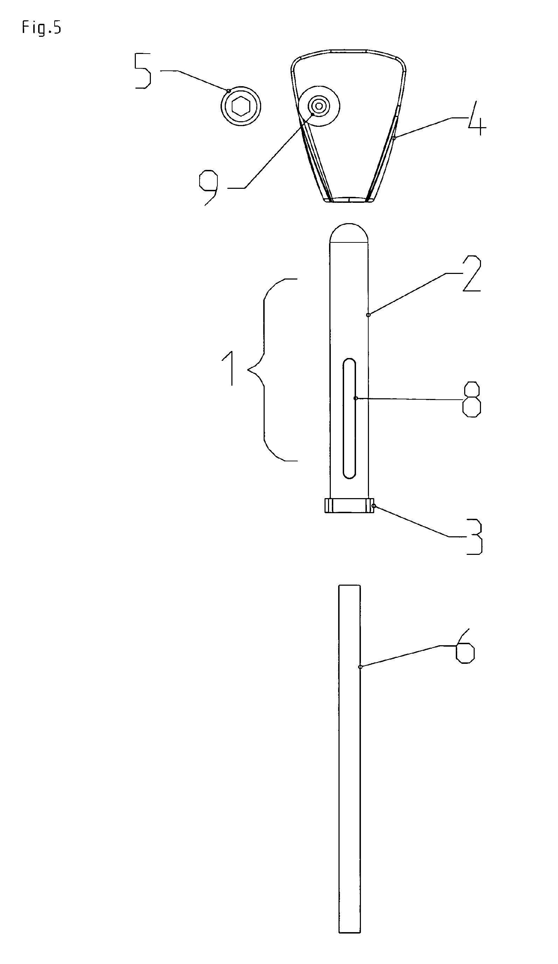

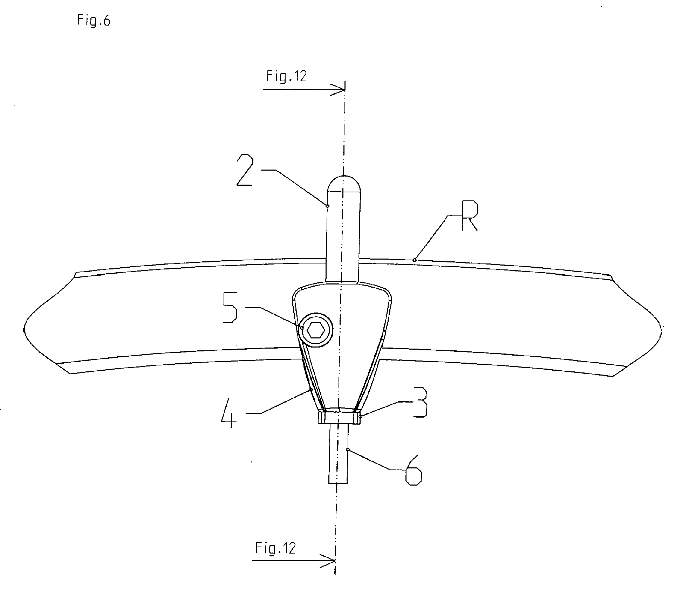

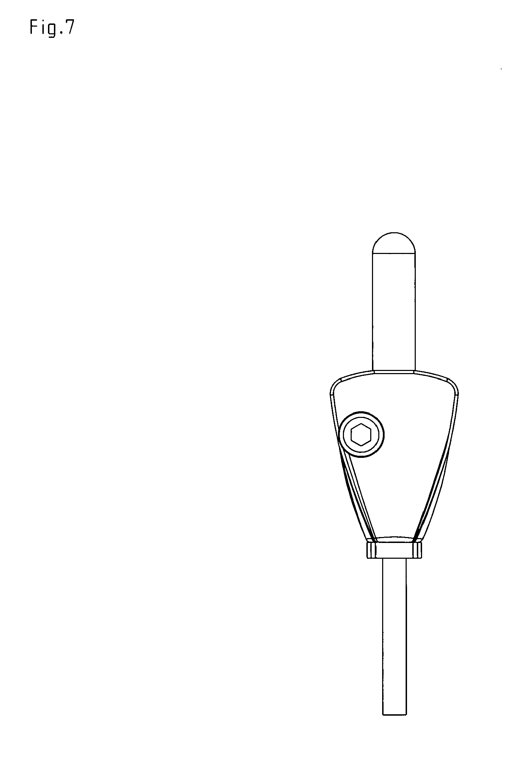

Die Fig. 5 bis 7 zeigen weitere Abbildungen der erfindungsgemäßen Schutzkappe 1, teilweise mit Verbindungsmittel 4 und Strebe 6. In Fig. 5 ist auch ein Längsschlitz 8 in dem Schaft 2 der Schutzkappe 1 zu erkennen, der eine kraftschlüssige Verbindung zwischen der Schutzkappe 1 und der Strebe 6 begünstigt.

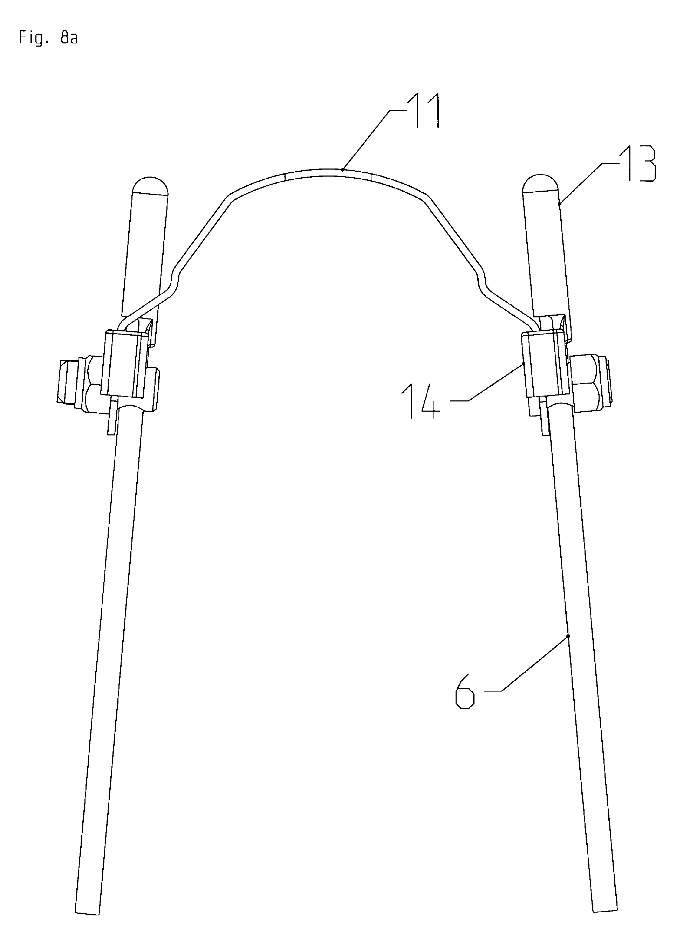

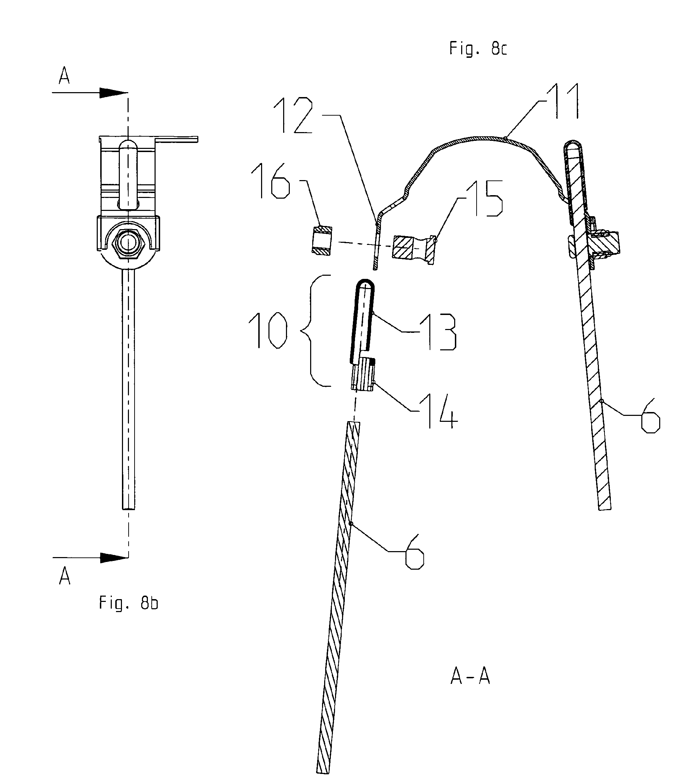

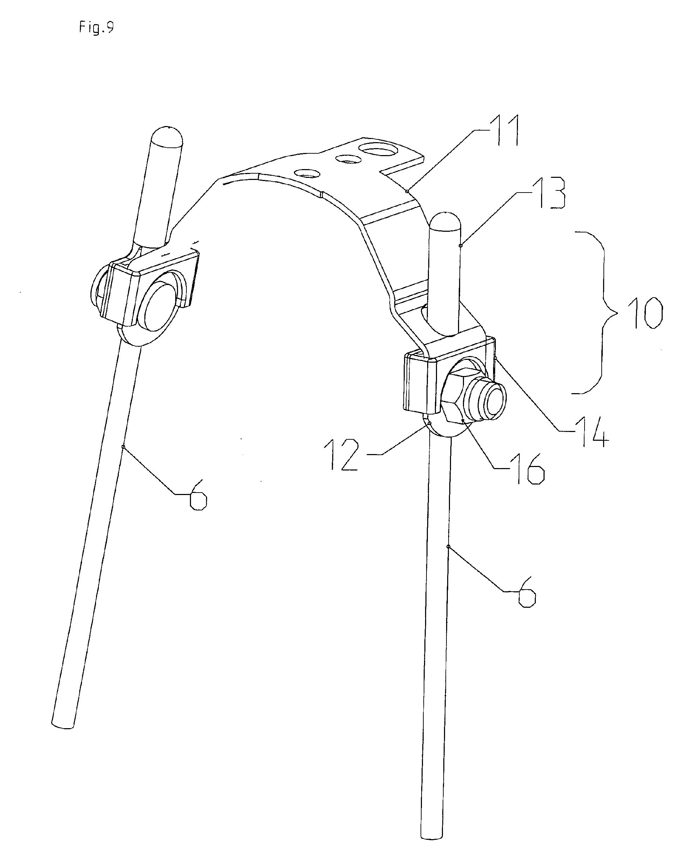

In den Fig. 8a bis 8c, sowie 9 bis 11 sind entsprechende Ansichten einer erfindungsgemäßen Befestigungsanordnung bzw. erfindungsgemäßen Schutzkappe 10 mit einem Befestigungsschuh 14 dargestellt. In den Fig. 8a bis 8c und 9 ist eine Anordnung aus Festbrücke 11, Schutzkappe 10 mit Befestigungsschuh 14, Streben 6 und Anschlussmitteln dargestellt.

Es ist erkennbar, dass die Festbrücke 11 eine Anschlussfahne 12 aufweist, wobei die Strebe 6 mittels eines Anschlussmittels mit der Anschlussfahne 12 verbunden ist. Das Anschlussmittel umfasst hier im Wesentlichen einen Bolzen 15 mit einer Querbohrung und eine Mutter 16, die mit der Anschlussfahne 12 verbunden ist. Ferner ist erkennbar, dass die Schutzkappe 10 einen einseitig geschlossenen hohlzylinderförmigen Schaft 13 und den hohlkastenförmigen Befestigungsschuh 14 aufweist. Auch hier ist erkennbar, dass der hohlzylinderförmige Schaft 13 endseitig verschlossen und einen halbkugelförmigen Kopf zur Minimierung der Verletzungsgefahr aufweist.

Der Befestigungsschuh 14 umgibt die Anschlussfahne 12 und hält damit den einseitig geschlossenen hohlzylinderförmigen Schaft 13 in seiner Position. Es kann insbesondere vorgesehen sein, dass der Befestigungsschuh in einer Draufsicht kastenförmig ausgestaltet ist. Entsprechend eignet sich ein derartiger Befestigungsschuh in vorteilhafter Weise um auf eine im Querschnitt rechteckförmige Befestigungsfahne aufgeschoben zu werden. Ferner weist der Befestigungsschuh 14 eine Aussparung 17 auf, so dass der Befestigungsschuh teilweise über den Bolzen 15 geschoben werden kann. Die Aussparung kann insbesondere dazu eingerichtet ist, dass der Befestigungsschuh sehr knapp oberhalb des Bolzens anbringbar ist.

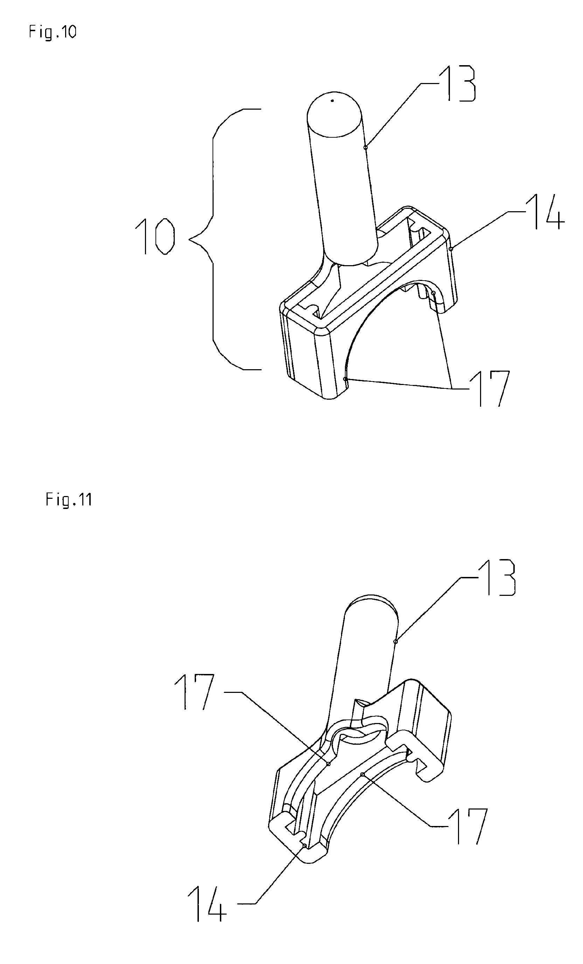

Es kann ferner vorgesehen sein, dass die Strebe 6 bei der Festbrücke 11 sowohl innen als auch außen montiert werden kann. Sehr deutlich ist dies in der Fig.8a zu erkennen, wo die linke Strebe 6 innen und die rechte Strebe 6 außen montiert ist. Der Befestigungsschuh 10 wird dafür nur verschoben. Es ist ferner vorgesehen, dass im Inneren des Befestigungsschuhs eine kleine Rippe, sehr gut in den Fig.10 bzw. 11 zu erkennen, vorgesehen ist. Diese Rippe trennt zwei Bereiche ab, welche die Anschlussfahne 12 der Festbrücke 11 aufnehmen. Durch diese Maßnahme kann eine optimale Anpassung an die beim Fahrrad vorgefundenen räumlichen Möglichkeiten vorgenommen werden.

Die vorgeschlagene Schutzkappe 1 für eine Anordnung aus Verbindungsmittel 4 und Strebe 6 zur Befestigung eines Schutzbleches an einem Fahrradrahmen, kann sich insbesondere dadurch auszeichnen, dass die Schutzkappe 1 einen hohlzylinderförmigen Schaft 2 zum Aufstecken auf die Strebe 6 aufweist, wobei der Schaft 2 zur Aufnahme in dem Verbindungsmittel 4 ausgestattet ist, wobei der Schaft 2 einen Anschlag 3 aufweist, mit dem die Schutzkappe 1 in dem Verbindungsmittel 4 gesichert werden kann, und/oder dadurch dass der Schaft 2 der Schutzkappe 1 ein oder mehrere Längsschlitze 8 aufweist und/oder dadurch dass der Anschlag 3 der Schutzkappe 1 als umlaufender Kragen um den Schaft 2 ausgestaltet ist.

Die vorgeschlagene Schutzkappe 10 für eine Anordnung aus einer Festbrücke 11 mit mindestens einer Anschlussfahne 12, einem Anschlussmittel und einer Strebe 6 zur Befestigung eines Schutzbleches an einem Fahrradrahmen, kann sich insbesondere dadurch auszeichnen, dass die Schutzkappe 10 einen hohlzylinderförmigen Schaft 13 und einen Befestigungsschuh 14 aufweist, wobei der Schaft 13 zur Aufnahme der Strebe 6 und der Befestigungsschuh 14 dazu eingerichtet ist, auf die Anschlussfahne 12 aufgeschoben zu werden und/oder dadurch, dass der Befestigungsschuh 14 in einer Draufsicht kastenförmig ausgestaltet ist und/oder dadurch, dass der Befestigungsschuh 14 mit einer Aussparung 17 ausgestattet ist, die dazu eingerichtet ist, dass der Befestigungsschuh 14 sehr knapp oberhalb des Anschlussmittels anbringbar ist.

## Patentansprüche

1. Befestigungsanordnung für einen Radschützer (R) an einem Fahrradrahmen, umfassend
- mindestens ein Verbindungsmittel (4, 11, 12), eine Strebe (6) und eine Schutzkappe (1) für die Strebe (6), wobei
- die Strebe (6) an dem Fahrradrahmen festlegbar ist, wobei
- das Verbindungsmittel (4, 11, 12) an dem Radschützer festlegbar ist,
**dadurch gekennzeichnet, dass**
die Schutzkappe (1) an dem Verbindungsmittel (4, 11, 12) festlegbar ist.

2. Befestigungsanordnung nach Anspruch 1, **dadurch gekennzeichnet, dass** die Schutzkappe (1) einen Schaft (2) aufweist, wobei das Verbindungsmittel (4) einen Schacht (7) zur Aufnahme und Festlegung des Schaftes (2) aufweist.

3. Befestigungsanordnung nach einem der vorhergehenden Ansprüche, **dadurch gekennzeichnet, dass** das Verbindungsmittel (4) eine Aussparung (A) zur Verbindung mit dem Radschützer (R) aufweist.

4. Befestigungsanordnung nach einem der vorhergehenden Ansprüche, **dadurch gekennzeichnet, dass** das Verbindungsmittel (4) mit einer Schraube (5) ausgestattet ist, welche die Aussparung (A) überbrückt.

5. Befestigungsanordnung nach einem der vorhergehenden Ansprüche, **dadurch gekennzeichnet, dass** neben dem Schacht (7) ein Schlitz vorgesehen ist, wobei eine Schraube (5) vorgesehen ist, die den Schlitz überbrückt.

6. Befestigungsanordnung nach Anspruch 4 und 5, **dadurch gekennzeichnet, dass** die Schraube (5) sowohl den Schlitz als auch die Aussparung (A) überbrückt.

7. Befestigungsanordnung nach Anspruch 1, **dadurch gekennzeichnet, dass** das Verbindungsmittel eine Festbrücke (11) mit einer Anschlussfahne (12) aufweist, wobei
- die Festbrücke (11) dazu eingerichtet ist, quer zur Längsrichtung des Radschützers (R) angebracht zu werden, wobei
- die Anschlussfahne (12) zur Verbindung mit der Strebe (6) eingerichtet ist.

8. Befestigungsanordnung nach Anspruch 7, **dadurch gekennzeichnet, dass** die Verbindung zwischen Anschlussfahne (12) und Strebe (6) mittels eines Bolzens (15) hergestellt wird, wobei der Bolzen (15) eine Querbohrung zur Aufnahme der Strebe (6) aufweist, wobei die in der Querbohrung aufgenommene Strebe (6) mittels einer auf dem Bolzen (15) aufgenommenen Mutter (16) gegenüber der Anschlussfahne (12) verspannt werden kann.

9. Befestigungsanordnung nach Anspruch 7 oder 8, **dadurch gekennzeichnet, dass** die Schutzkappe (10) einen hohlzylinderförmigen Schaft (13) zum Aufstecken auf die Strebe (6), sowie einen hohlkastenförmigen Befestigungsschuh (14) aufweist, wobei der hohlkastenförmige Befestigungsschuh (14) dazu eingerichtet ist, die Anschlussfahne (12) zu umgreifen.

10. Schutzkappe (1) für eine Befestigungsanordnung nach einem der Ansprüche 1 bis 6, **dadurch gekennzeichnet, dass** die Schutzkappe (1) einen hohlzylinderförmigen Schaft (2) zum Aufstecken auf die Strebe (6) aufweist, wobei der Schaft (2) zur Aufnahme in dem Verbindungsmittel (4) ausgestaltet ist.

11. Schutzkappe nach Anspruch 10, **dadurch gekennzeichnet, dass** der Schaft (2) einen Anschlag (3) aufweist, mit dem die Schutzkappe (1) in dem Verbindungsmittel (4) gesichert werden kann.

12. Schutzkappe nach Anspruch 10 oder 11, **dadurch gekennzeichnet, dass** der Schaft (2) der Schutzkappe (1) ein oder mehrere Längsschlitze (8) aufweist.

13. Schutzkappe nach Anspruch 10 bis 12, **dadurch gekennzeichnet, dass** der Anschlag (3) der Schutzkappe (1) als umlaufender Kragen um den Schaft (2) ausgestaltet ist.

14. Schutzkappe (10) für eine Befestigungsanordnung nach einem der Ansprüche 7 bis 9, **dadurch gekennzeichnet, dass** die Schutzkappe einen hohlzylinderförmigen Schaft (13) zum Aufstecken auf die Strebe (6), sowie einen hohlkastenförmigen Befestigungsschuh (14) zur Befestigung an der Anschlussfahne (12) aufweist.
